# EUROPEAN PATENT SPECIFICATION

(11) **EP 4 074 664 B1**
(45) Date of publication and mention of the grant of the patent: **30.09.2026**
(21) Application number: 20899444.2
(22) Date of filing: 04.12.2020
(51) Int. Cl.: H05B 3/82, H05B 3/44, H05B 3/06, C03B 5/225, C03B 5/235, F27D 3/14, F27D 11/02

(54) **APPARATUS FOR TRANSFERRING MOLTEN GLASS, APPARATUS FOR PRODUCING GLASS ARTICLE, AND METHOD FOR PRODUCING GLASS ARTICLE**
VORRICHTUNG ZUM TRANSFERIEREN VON GESCHMOLZENEM GLAS, VORRICHTUNG ZUM HERSTELLEN EINES GLASARTIKELS UND VERFAHREN ZUM HERSTELLEN EINES GLASARTIKELS
APPAREIL PERMETTANT DE TRANFÉRER DU VERRE FONDU, APPAREIL PERMETTANT DE PRODUIRE UN ARTICLE EN VERRE ET PROCÉDÉ PERMETTANT DE PRODUIRE UN ARTICLE EN VERRE

(30) Priority: 10.12.2019 JP 2019223194
(43) Date of publication of application: 19.10.2022
(73) Proprietor: AGC INC., Chiyoda-ku Tokyo 100-8405 (JP)
(72) Inventor: MAEHARA, Terutaka, Tokyo 100-8405 (JP); NIWA, Akifumi, Tokyo 100-8405 (JP); ENOMOTO, Takashi, Tokyo 100-8405 (JP); HYODO, Shuntaro, Tokyo 100-8405 (JP); DOI, Yoji, Tokyo 100-8405 (JP)
(74) Representative: Müller-Boré & Partner Patentanwälte PartG mbB
(86) International application number: PCT/JP2020/045184
(87) International publication number: WO 2021/117618

(56) References cited:
- EP-A2- 0 325 055
- WO-A1-2014/192478
- WO-A1-2019/244802
- JP-A- 2014 009 126
- JP-A- 2017 065 973
- JP-U- S6 162 395
- JP-U- S6 162 395
- US-A1- 2017 284 872

## Description

### TECHNICAL FIELD

The present disclosure relates to an apparatus for transferring molten glass, an apparatus for producing a glass article, and a method for producing a glass article.

### BACKGROUND ART

A glass article producing apparatus includes a melting apparatus, a transferring apparatus, and a forming apparatus. The melting apparatus melts raw materials of glass to produce molten glass. The transferring apparatus transfers the molten glass produced by the melting apparatus, and performs primary fining, secondary fining, and temperature adjustment. "Fining" means removal of bubbles. In the primary fining, the temperature of the molten glass is raised to a temperature above the melting temperature to increase the bubbles diameters to cause the bubbles to ascend. In the secondary fining, the temperature of the molten glass is brought to a temperature below the primary fining temperature to cause the remaining bubbles to shrink. In the temperature adjustment, after the secondary fining, the temperature of the molten glass is adjusted to the forming temperature. The secondary fining may be included in the temperature adjustment. The forming apparatus forms the molten glass, transferred by the transferring apparatus, into glass in a predetermined shape.

PTL 1 describes a technique in which a tube for transferring molten glass is made of platinum or a platinum alloy, and an electric current is passed through the tube to heat the tube, which heats the molten glass. PTLs 2 to 5 disclose a technique similar to PTL 1.

PTL 6 describes a technique in which a wall for transferring molten glass is made of platinum and the like, and the wall is heated from the outside by an electric heater or a burner, which heats the molten glass. PTL 7 also discloses a technique similar to PTL 6.

PTL 8 describes a technique in which a tube made of platinum or a platinum alloy is provided in molten glass, and an electric current is passed through the tube to heat the tube, which heats the molten glass. The molten glass is housed in a refractory material, and a linear layer made of platinum or a platinum alloy is provided on the inside of the refractory material.

PTL 9 describes a technique in which a pair of electrodes are provided in molten glass, and a voltage is applied to the molten glass via the pair of electrodes to pass an electric current through the molten glass, so that the molten glass is heated by Joule heat.

### Citation List

### Patent Literature

PTL 1: Japanese Patent Publication No. 6049225
PTL 2: Japanese Patent Publication No. 6533221
PTL 3: Japanese Patent Publication No. 6435827
PTL 4: Japanese Patent Publication No. 6520375
PTL 5: Japanese Laid-Open Patent Publication No. 2017-65973
PTL 6: Japanese Examined Patent Publication No. S43-12885
PTL 7: Japanese Examined Patent Publication No. S54-15764
PTL 8: United States Patent No. 3912477
PTL 9: Japanese Patent Publication No. 2570350

Furthermore, JP S61 62395U discloses an apparatus for transferring molten glass according to the preamble of claim 1.

### SUMMARY OF THE INVENTION

### [Technical Problem]

An apparatus for transferring molten glass includes a refractory material. In order to prevent components of the refractory material from dissolving into molten glass, a metal layer is provided on the inside of the refractory material. The metal layer is mainly used by the transferring apparatus. This is because, when components of the refractory material dissolve into molten glass in the transferring apparatus, a foreign matter that occurs due to the dissolving flows into the forming apparatus.

According to the techniques of PTLs 1 to 5, an electric current is passed through the metal layer to heat the metal layer. When the temperature of the metal layer increases, oxidative consumption may occur, which may cause defects such as holes or cracks in the metal layer. In this case, the defects make the flow of current uneven, which impairs the heating performance. For example, uneven heating occurs.

According to the techniques of PTLs 6 to 7, the metal layer is heated from the outside of the metal layer. The metal layer is heated via the refractory material, and therefore, in view of the heating efficiency, the thickness of the refractory material is small. Therefore, when a hole or the like is formed in the metal layer, a hole is also quickly formed in the refractory material, which causes leaking of the molten glass.

According to the technique of PTL 8, a large current of, for example, about 5000 A, is passed through the tube made of platinum or a platinum alloy that directly comes into contact with the molten glass. Therefore, in a case where the metal layer is provided on the inside of the refractory material via the molten glass, the large current leaks to the metal layer.

According to the technique of PTL 9, a current is passed through the molten glass, and therefore, the metal layer cannot be used. This is because the metal layer has an electric conductivity higher than the molten glass, and accordingly, a current also flows through the metal layer, and the current passed through the molten glass decreases. Because the metal layer cannot be used, components of the refractory material may dissolve into the molten glass. Therefore, the technique of PTL 9 is used by the melting apparatus, but cannot be used for the transferring apparatus.

An aspect of the present disclosure provides a technique capable of alleviating reduction of the heating performance of molten glass and leakage of the molten glass, when a defect occurs in a metal layer.

### [Solution to Problem]

The present invention is an apparatus for transferring molten glass, including a wall including a refractory material and a metal layer provided on an inside of the refractory material, the metal layer coming into contact with the molten glass, and the metal layer being configured to guide the molten glass, the apparatus for transferring molten glass including a heater including a metal cover protruding to an inside of the wall, the metal cover coming into contact with the molten glass, the heater including a heat generating element electrically insulated from the metal cover, and the heat generating element receiving electric power to radiate heat rays to heat the metal cover from an inside, wherein the heater further includes a spacer configured to electrically insulate between the metal cover and the heat generating element, and wherein the spacer is constituted by sapphire

In the apparatus for transferring molten glass according to the aspect of the present invention, the heater may be provided at a position so as to be immersed in an inside of the molten glass.

In the apparatus for transferring molten glass according to the aspect of the present invention, the metal layer may be constituted by a metal including one or more types selected from platinum, rhodium, tungsten, iridium, and molybdenum.

In the apparatus for transferring molten glass according to the aspect of the present invention, the metal cover may be constituted by a metal including one or more types selected from platinum, rhodium, tungsten, iridium, and molybdenum.

In the apparatus for transferring molten glass according to the aspect of the present invention, the heater may be in a rod shape, and a longitudinal direction of the heater may be a direction orthogonal to an inner wall surface of the wall.

In the apparatus for transferring molten glass according to the aspect of the present invention, the metal layer may be formed in a pipe shape.

In the apparatus for transferring molten glass according to the aspect of the present invention, the heat generating element may be constituted by graphite or a carbon fiber reinforced carbon composite material.

The present invention is an apparatus for producing a glass article, including a melting apparatus configured to generate molten glass by melting a raw material of glass,
the apparatus for transferring molten glass according to the present invention being configured to transfer the molten glass produced by the melting apparatus, a forming apparatus configured to form the molten glass transferred by the apparatus for transferring molten glass into glass in a desired shape, an annealing apparatus configured to anneal the glass formed by the forming apparatus, and a processing apparatus configured to process the glass annealed by the annealing apparatus into a glass article.

In the apparatus for producing the glass article according to the aspect of the present invention, the apparatus for transferring molten glass may be a fining tank.

The present invention is a method for producing a glass article, including preparing a raw material of glass, generating molten glass by melting the raw material, transferring the molten glass with the apparatus for transferring molten glass according to the present invention, forming the molten glass transferred by the apparatus for transferring molten glass into glass in a desired shape, annealing the formed glass, and processing the annealed glass into a glass article.

The method for producing the glass article according to the aspect of the present invention may further include heating the molten glass with the apparatus for transferring molten glass to fine the molten glass.

### [Advantageous Effects of Invention]

According to an aspect of the present disclosure, reduction of the heating performance of molten glass and leakage of the molten glass can be alleviated, when a defect occurs in a metal layer.

### BRIEF DESCRIPTION OF THE DRAWINGS

FIG. 1 is a diagram illustrating a glass article producing apparatus according to an embodiment.
FIG. 2 is a flowchart of a method for producing a glass article according to an embodiment.
FIG. 3 is a flowchart of an example of S3 of FIG. 2.
FIG. 4 (A) is a cross-sectional view illustrating an apparatus for transferring molten glass according to an embodiment, and FIG. 4 (B) is a side view of the transferring apparatus as illustrated in FIG. 4 (A).
FIG. 5 is a cross-sectional view illustrating a transferring apparatus according to a first modified embodiment.
FIG. 6 is a cross-sectional view illustrating a transferring apparatus according to a second modified embodiment.
FIG. 7 is a cross-sectional view illustrating a transferring apparatus according to a third modified embodiment.
FIG. 8 (A) is a cross-sectional view illustrating a transferring apparatus according to a fourth modified embodiment, and FIG. 8 (B) is a side view of the transferring apparatus as illustrated in FIG. 8 (A).
FIG. 9 is a cross-sectional view illustrating a transferring apparatus according to a fifth modified embodiment.
FIG. 10 (A) is a cross-sectional view illustrating a transferring apparatus according to a sixth modified embodiment, and FIG. 10 (B) is a side view of the transferring apparatus as illustrated in FIG. 10 (A).
FIG. 11 (A) is a cross-sectional view illustrating a transferring apparatus according to a seventh modified embodiment, and FIG. 11 (B) is a side view of the transferring apparatus as illustrated in FIG. 11 (A).
FIG. 12 is a cross-sectional view illustrating a transferring apparatus according to an eighth modified embodiment.

### MODES FOR CARRYING OUT THE INVENTION

Hereinafter, embodiments of the present disclosure will be described with reference to the drawings. In each drawing, to the same or corresponding configurations the same reference numeral will be assigned, and an explanation may be omitted.

### (Production apparatus for producing glass article)

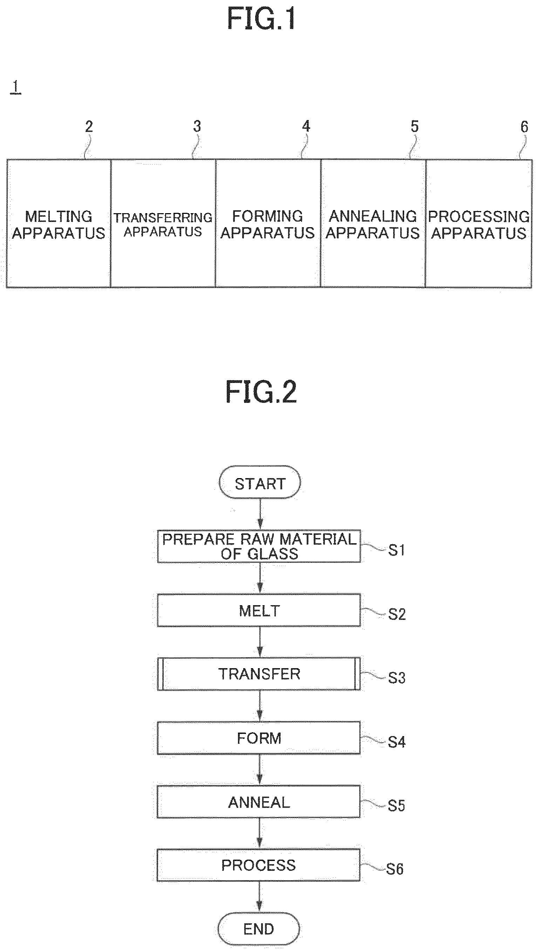

As illustrated in FIG. 1, a glass article producing apparatus 1 includes a melting apparatus 2, a transferring apparatus 3, a forming apparatus 4, an annealing apparatus 5, and a processing apparatus 6.

The melting apparatus 2 melts raw materials of glass and generates molten glass. Multiple types of raw materials of glass are prepared, and are mixed in advance at a mixing ratio according to the composition of the glass. The melting apparatus 2 charges the mixed raw materials into a melting furnace, mixes the mixed raw materials in the melting furnace, and produces molten glass. The melting apparatus 2 may be any known furnace, and may be a combustion furnace with a gas burner or a furnace of submerged combustion.

When the glass is soda lime glass, the composition of the glass is, in terms of mol% based on oxides, for example, a content of SiO₂ of 50% or more and 75% or less; a content of Al₂O₃ of 0% or more and 20% or less; a total content of Li₂O, Na₂O, and K₂O of 5% or more and 25% or less; and a total content of MgO, CaO, SrO, and BaO of 0% or more and 20% or less.

Where the glass is soda lime glass, the mixed raw material includes, for example, silica sand, dolomite (MgCO₃·CaCO₃) , limestone (CaCO₃), sodium carbonate (Na₂CO₃), aluminum oxide (Al₂O₃), a fining agent, and the like. The fining agent is sodium sulfate (Na₂SO₄), salt (NaCl), antimony oxide (Sb₂O₅), or tin oxide (SnO₂).

The glass is not limited to soda lime glass, and may be, for example, alkali-free borosilicate glass or aluminosilicate glass.

The mixed raw material may be granulated or not granulated prior to be charged into the melting furnace. In the melting apparatus 2, the mixed raw material may be charged into the melting furnace with glass cullet. Glass cullet may be mixed into the mixed raw material prior to be charged into the melting furnace, or the glass cullet may be charged into the melting furnace separately from the mixed raw material.

The transferring apparatus 3 transfers the molten glass produced by the melting apparatus 2. The molten glass flows from the melting apparatus 2 to the forming apparatus 4. The main flow of the molten glass flows in a desired direction without reversing. The transferring apparatus 3 transfers the molten glass to perform primary fining, secondary fining, and temperature adjustment of the molten glass. The transferring apparatus 3 may be a fining tank. However, in the transfer process, there may be a backflow due to local convection that is not the main flow.

In the primary fining, the temperature of the molten glass is raised to a temperature above the melting temperature to increase the bubbles diameters to cause the bubbles to ascend to the liquid surface. In the primary fining, due to a temperature rise, bubbles expand. Also, in the primary fining, gas is generated by reduction reaction of the fining agent contained in the molten glass, and bubbles grow by absorbing the generated gas.

In the secondary fining, the temperature of the molten glass is reduced to a temperature below the primary fining temperature to cause the remaining bubbles to shrink. In the secondary fining, due to a decrease in the temperature, the bubbles shrink. In addition, in the secondary fining, in the primary fining, the temperature is lowered, so that a reaction opposite to the reaction of the primary fining occurs. Accordingly, gas in the bubbles is reabsorbed by the molten glass, and the bubbles shrink.

In the temperature adjustment, after the secondary fining, the temperature of the molten glass is adjusted to a forming temperature. In the temperature adjustment, in addition to adjusting the temperature of the molten glass to the forming temperature, the temperature of the molten glass may be uniformized by agitation of the molten glass. Unevenness in forming caused by unevenness in the temperature of the molten glass can be alleviated. The secondary fining may be included in the temperature adjustment.

The raw material of glass does not have to include a fining agent. In addition, fining of vacuum degassing may be performed regardless of whether there is a fining agent. In the fining of vacuum degassing, bubbles in molten glass are degassed under a reduced pressure atmosphere. The details of the transferring apparatus 3 are explained later.

The forming apparatus 4 forms the molten glass transferred by the transferring apparatus 3 into a desired shape of glass. For example, a float process, a fusion process, or a roll-out process may be used to form a sheet of glass.

The annealing apparatus 5 slowly cools down the glass formed by the forming apparatus 4. The annealing apparatus 5 includes, for example, an annealing furnace and a transferring roller for transferring glass in a desired direction in the annealing furnace. A plurality of transferring rollers are arranged, for example, in the horizontal direction at intervals. The glass is slowly cooled as it is conveyed from an inlet to an outlet of the annealing furnace. By slowly cooling the glass, a glass with low residual strain is obtained.

The processing apparatus 6 processes the glass that is annealed by the annealing apparatus 5 into a glass article. The processing apparatus 6 may be one or more selected from, for example, a cutting apparatus, a grinding apparatus, a polishing apparatus, and a coating apparatus. The cutting apparatus cuts a glass article from the glass that is cooled down by the annealing apparatus 5. The cutting apparatus, for example, forms a scribe line on the glass annealed by the annealing apparatus 5, and cuts the glass along the scribe line.

### (Production method for producing glass article)

As illustrated in FIG. 2, the method for producing a glass article includes S1 to S6. In S1 of FIG. 2, a raw material of glass is prepared. Next, in S2 of FIG. 2, the melting apparatus 2 melts raw materials to produce molten glass.

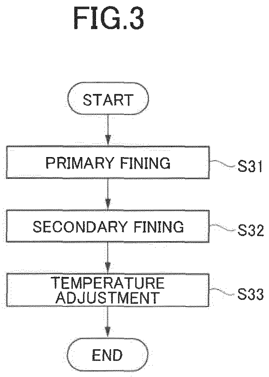

Next, in S3 of FIG. 2, the transferring apparatus 3 transfers the molten glass produced by the melting apparatus 2. S3 includes S31 to S33 as illustrated in FIG. 3. First, in S31 of FIG. 3, the transferring apparatus 3 performs the primary fining of the molten glass. Subsequently, in S32 of FIG. 3, the transferring apparatus 3 performs the secondary fining of the molten glass. Thereafter, in S33 of FIG. 3, the transferring apparatus 3 adjusts the temperature of the molten glass. Note that the secondary fining may be included in the temperature adjustment. In addition, in the primary fining and the secondary fining, the pressure in the transferring apparatus 3 may be reduced, and the fining of vacuum degassing may be performed.

Next, in S4 of FIG. 2, the forming apparatus 4 forms the molten glass transferred by the transferring apparatus 3 into glass of a desired shape. Thereafter, in S5 of FIG. 2, the annealing apparatus 5 anneals the glass formed by the forming apparatus 4. Finally, in S6 of FIG. 2, the processing apparatus 6 processes the glass annealed by the annealing apparatus 5 into a glass article.

### (Conveyance apparatus)

The transferring apparatus 3 transfers the molten glass produced by the melting apparatus 2. The molten glass flows from the melting apparatus 2 to the forming apparatus 4. The transferring apparatus 3 includes one or more selected from a horizontal channel, a vertical channel, and a diagonal channel. The direction of flow in the vertical channel may be either upward or downward. Also, the direction of flow in the diagonal channel may be either diagonally upward or diagonally downward. Also, a cross-sectional shape of the channel orthogonal to the flow may be either a circular shape, an elliptic shape, or a rectangular shape, or may change at any given point. Furthermore, the size of the flow in the cross section orthogonal to the flow may be constant, or may change at any given point. The main flow of the molten glass flows in a desired direction without reversing.

The transferring apparatus 3 transfers the molten glass, and performs the primary fining, the secondary fining, the temperature adjustment, and the like of the molten glass. The primary fining, the secondary fining, and the temperature adjustment may be performed in a channel of which the cross-sectional shape orthogonal to the flow is a circular shape or an elliptic shape, or in a channel of which the cross-sectional shape is a rectangular shape. However, because bubbles ascend to the liquid surface in the fining, a space for discharge is preferably formed above the liquid surface.

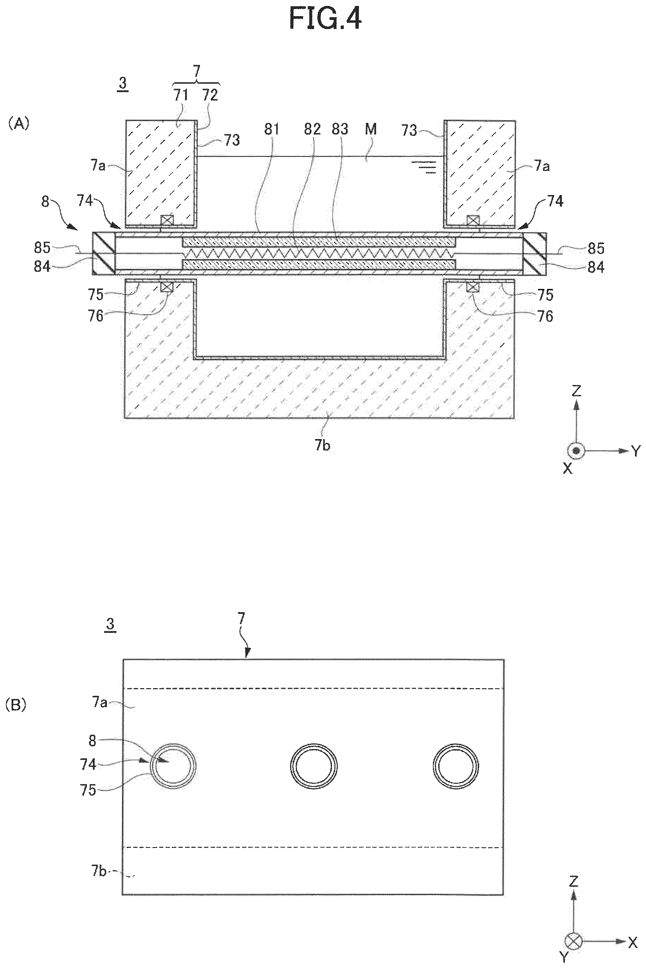

As illustrated in FIG. 4, the transferring apparatus 3 includes a wall 7 in contact with molten glass M. In FIG. 4, an X axis direction, a Y axis direction, and a Z axis direction are directions orthogonal to each other, the X axis direction and the Y axis direction are horizontal directions, and the Z axis direction is a vertical direction. In FIG. 4, the flow direction of the molten glass M is the X axis direction.

The wall 7 is formed in, for example, a gutter shape, and includes a pair of side walls 7a, 7a provided on either side in the Y axis direction and a lower wall 7b connecting the lower ends of the side walls 7a, 7a constituting the pair. The upper side of the wall 7 in the gutter shape is covered with a ceiling, not illustrated. The wall 7 includes a refractory material 71 such as a brick. The wall 7 includes a metal layer 72 in order to prevent components of the refractory material 71 from dissolving into the molten glass M. The metal layer 72 is a lining provided on the inside of the refractory material 71, and is in contact with the molten glass M to guide the molten glass M in a desired direction.

The metal layer 72 may be constituted by, for example, a metal including one or more types selected from platinum (Pt), rhodium (Rh), tungsten (W), iridium (Ir), and molybdenum (Mo). The metal includes an alloy. The total content of Pt, Rh, W, Ir, and Mo in the alloy may be equal to or higher than 80% by mass and may be equal to or less than 100% by mass. Pt, Rh, W, Ir, and Mo have a high corrosion resistance against molten glass.

A portion of the wall 7 (for example, an upper end portion) does not come into contact with the molten glass M, and therefore, it does not have to be covered with the metal layer 72 and may be the refractory material 71.

The metal layer 72 may be a layer formed by thermal metal spraying on the inside of the refractory material 71.

The metal layer 72 is in, for example, a gutter shape, and is open on the upper side. In a case where a space is formed above the liquid surface of the molten glass M, the ceiling, not illustrated, does not come into contact with the molten glass M, and therefore, the ceiling does not have to include the metal layer 72. As explained later, the metal layer 72 may be in a pipe shape to be closed in the cross section orthogonal to the flow direction of the molten glass M.

The metal layer 72 does not have to be energized to be heated. Furthermore, the wall 7 does not have to be heated from the outside. Therefore, the metal layer 72 is highly flexible in design.

The transferring apparatus 3 includes a heater 8 to adjust the temperature of the molten glass M. The heater 8 includes a metal cover 81 and a heat generating element 82. The metal cover 81 protrudes to the inside of the wall 7 to come into contact with the molten glass M. The heat generating element 82 is electrically insulated from the metal cover 81, and is energized to radiate heat rays to heat the metal cover 81 from the inside. The heat generating element 82 is provided on the inside of the metal cover 81 to heat the molten glass M via the metal cover 81.

According to the present embodiment, the heater 8 protruding to the inside of the wall 7 heats the molten glass M. The metal layer 72 of the wall 7 is not caused to generate heat, and no electric current is passed through the metal layer 72. Therefore, even if a defect such as a hole occurs in the metal layer 72, the heating performance of the molten glass M is maintained, in contrast to the techniques of PTLs 1 to 5.

Furthermore, according to the present embodiment, the molten glass M is heated on the inside of the wall 7. The wall 7 is not heated from the outside of the wall 7, and the thickness of the refractory material 71 can be increased. Therefore, in contrast to the techniques of PTLs 6 to 7, even if a defect such as a hole occurs in the metal layer 72, leakage of the molten glass M can be alleviated by the refractory material 71, because the thickness of the refractory material 71 is thick.

Furthermore, according to the present embodiment, a portion of the molten glass M that is away from the wall 7 can also be heated, and therefore, as compared with the techniques of PTLs 1 to 7, the size of the molten glass M in a lateral cross section can be increased, and the flow rate of the molten glass M can be increased. The lateral cross section refers to a cross section orthogonal to the flow.

Still furthermore, according to the present embodiment, the heat generating element 82 is provided on the inside of the metal cover 81 that is electrically insulated from the heat generating element 82, and therefore, the heat generating element 82 is electrically insulated also from the molten glass M. Accordingly, in contrast to the technique of PTL 8, electrical leak to the molten glass M can be alleviated, electrochemical reaction of the molten glass M can be alleviated, and occurrence of bubbles and the like that are the causes of defects can be alleviated.

The heater 8 is provided at a position so as to be immersed in the inside of the molten glass M. For example, the heater 8 is provided below the liquid surface of the molten glass M but above the lower wall 7b. Because the entirety of the circumferential direction of the heater 8 is in contact with the molten glass M, the thermal transfer efficiency of heat is high.

Multiple heaters 8 may be provided with intervals in the vertical direction. At least one heater 8 may be provided below the liquid surface of the molten glass M but above the lower wall 7b. The remaining heaters 8 may be provided such that only the upper portions are exposed from the liquid surface, or such that the entireties are above the liquid surface.

The heater 8 is in a rod shape, and the longitudinal direction of the heater 8 is in a direction orthogonal to an inner wall surface 73 of the wall 7. A desired portion of the molten glass M can be heated at the shortest distance from the inner wall surface 73 of the wall 7. Therefore, the length of the heater 8 can be reduced, and accordingly, the rigidity of the heater 8 can be raised, and thermal deformation of the heater 8 can be alleviated.

For example, the heater 8 is inserted into both of through holes 74, 74 of the side walls 7a, 7a constituting the pair. The entirety of the molten glass M in the Y axis direction can be heated, and the center of the molten glass M in the Y axis direction can also be heated. As a result, the size of the molten glass M in the lateral cross section can be increased, and the flow rate of the molten glass M can be increased.

The heat generating element 82 extends, for example, from any given point of one of the through holes 74 to any given point of the other of the through holes 74. The entirety of the molten glass M in the Y axis direction can be heated, and the molten glass M can be cooled and solidified at any given point of the through hole 74.

The diameters of the through holes 74 are set to a diameter larger than the heater 8, so that, during the process of raising the temperature from room temperature to an operation temperature at the start up of the transferring apparatus 3, the heater 8 and the wall 7 do not interfere with each other due to a thermal expansion difference between the heater 8 and the wall 7. Accordingly, the molten glass M flows into the through holes 74.

Therefore, the wall 7 may further include metal pipes 75 covering the through holes 74. The metal pipes 75 extend from the inner wall surface 73 of the wall 7 toward the outside, and are integrated with the metal layer 72 by welding. On the inside of the through holes 74, components of the refractory material 71 are prevented from dissolving into the molten glass M.

The metal pipes 75 come into contact with the molten glass M, and therefore, similar to the metal layer 72, the metal pipes 75 may be constituted by, for example, a metal including one or more types selected from Pt, Rh, W, Ir, and Mo. The metal includes an alloy. The total content of Pt, Rh, W, Ir, and Mo in the alloy may be equal to or higher than 80% by mass and may be equal to or less than 100% by mass.

Portions of the metal pipes 75 do not come into contact with the molten glass M, and therefore, these portions may be constituted by a metal other than Pt, Rh, W, Ir, and Mo, and may be constituted by, for example, stainless steel, nickel alloy, or the like. In this manner, the metal pipes 75 may be formed by connecting multiple metals.

The transferring apparatus 3 may include cooling materials 76 for cooling the molten glass M in the through holes 74. For example, the cooling materials 76 are embedded in the wall 7 to cool the through holes 74 with refrigerant or the like. The refrigerant may be a liquid such as water, or a gas such as air. Although the cooling materials 76 are embedded in the inside of the wall 7 in FIG. 4 (A), the cooling materials 76 may cool the through holes 74 from the outside of the wall 7.

As described above, the heater 8 includes the metal cover 81 and the heat generating element 82. The metal cover 81 comes into contact with the molten glass M, and therefore, similar to the metal layer 72, the metal cover 81 may be constituted by, for example, a metal including one or more types selected from Pt, Rh, W, Ir, and Mo. The metal includes an alloy. The total content of Pt, Rh, W, Ir, and Mo in the alloy may be equal to or higher than 80% by mass and may be equal to or less than 100% by mass.

Portions of the metal cover 81 (for example, end portions in the longitudinal direction) do not come into contact with the molten glass M, and therefore, these portions may be constituted by a metal other than Pt, Rh, W, Ir, and Mo, and may be constituted by, for example, stainless steel, nickel alloy, or the like. In this manner, the metal cover 81 may be formed by connecting multiple metals.

The metal cover 81 is formed in, for example, a pipe shape, and the heat generating element 82 is housed in the metal cover 81. The thickness of the metal cover 81 may be greater than the thickness of the metal layer 72. Defects such as holes can be prevented from being formed in the metal cover 81, and the molten glass M can be prevented from flowing to the inside of the metal cover 81. Even if defects such as holes are formed in the metal layer 72, such defects do not cause any problem. This is because the refractory material 71 prevents leakage of the molten glass M.

The heat generating element 82 may be constituted by, for example, a metal including one or more types selected from Mo, W, Ta, Nb, Ir, Pt, and Rh. The metal includes an alloy. These metals have high electric conductivities, and therefore, in order to increase the electric resistance, the heat generating element 82 may be formed in a coil shape.

The heat generating element 82 may be constituted by molybdenum dissilicate (MoSi₂), silicon carbide (SiC), lanthanum chromite (LaCrO₃), or the like. As compared with metals, these materials have higher electric resistivities, and therefore, these materials do not have to be formed in a coil shape, and may be formed in, for example, a rod shape or a pipe shape.

The heat generating element 82 may be constituted by a material of which the main component is carbon (C), such as graphite and a carbon fiber reinforced carbon composite (CC Composite) material. The material of which the main component is C has a high electric conductivity, and therefore, in order to improve the electric resistance, the heat generating element 82 may be in a plate shape having regularly arranged slits, or may be in a pipe shape. For example, slits may be regularly arranged in the longitudinal direction of a plate that is the heat generating element 82, or slits may be regularly arranged in the circumferential direction of a pipe that is the heat generating element 82.

The heater 8 further includes a spacer 83. The spacer 83 electrically insulates between the metal cover 81 and the heat generating element 82. The spacer 83 is formed in, for example, a pipe shape, and inserted into the inside of the metal cover 81 in the pipe shape. The length of the spacer 83 is equal to or more than the length of the heat generating element 82, and the heat generating element 82 is provided on the inside of the spacer 83.

Even when the heat generating element 82 bends due to gravity, the spacer 83 prevents the heat generating element 82 and the metal cover 81 from coming into contact with each other, and therefore, the heat generating element 82 and the metal cover 81 can be electrically insulated from each other. The length of the spacer 83 may be smaller than the length of the heat generating element 82, and multiple spacers 83 in a ring shape may be arranged with intervals in the longitudinal direction of the metal cover 81.

The spacer 83 has a transmittance of 50% or more with respect to heat rays radiated from the heat generating element 82. The wavelength of the heat rays is, for example, 400 nm to 5 µm. The heat rays transmit through the spacer 83 and are emitted to the metal cover 81, so that the metal cover 81 is heated from the inside.

The spacer 83 is constituted by sapphire (single-crystal aluminum oxide).

In a case where a specific modulus (a value obtained by dividing an elastic modulus by a specific gravity) of the heat generating element 82 is high, and the heat generating element 82 does not bend appreciably, the spacer 83 is not necessary. Materials of the heat generating element 82 with a high specific modulus include MoSi₂, SiC, LaCrO₃, and the material of which the main component is C.

The heater 8 may further include lids 84. The lids 84 seal the internal space of the metal cover 81. The lids 84 are provided on, for example, on either side of the longitudinal direction of the metal cover 81. The internal space of the metal cover 81 can be filled with inert gas or reducing gas. For example, nitrogen gas or argon gas is used as inert gas. For example, hydrogencontaining gas is used as reducing gas.

A material that can prevent oxidation of the heat generating element 82 and that cannot be used in an air atmosphere can be used as the material of the heat generating element 82. The material of the heat generating element 82 that cannot be used in an air atmosphere is, for example, a material of which the main component is Mo, W, Ta, Nb, Ir, and carbon. The material of the heat generating element 82 that can be used in an air atmosphere is, for example, Pt, Rh, MoSi₂, SiC, and LaCrO₃.

In a case where a material that can be used in an air atmosphere is used as the material of the heat generating element 82, the lids 84 are unnecessary.

The heater 8 may further include lead wires 85. The lead wires 85 are electrically insulated from the metal cover 81, and apply a voltage across both ends of the heat generating element 82. The lead wires 85 have a lower resistance than the heat generating element 82, and do not generate heat appreciably. In a case where the lids 84 are provided, the lead wires 85 are inserted into the through holes of the lids 84 via insulators.

As illustrated in FIG. 4 (B), multiple heaters 8 may be provided in a row with intervals in the X axis direction. The X axis direction is a flow direction of the molten glass M. Multiple heaters 8 may be arranged in a matrix form in the X axis direction and the Z axis direction. As seen in the Y axis direction, multiple heaters 8 may be arranged in a staggered pattern in the X axis direction.

### (First modified embodiment)

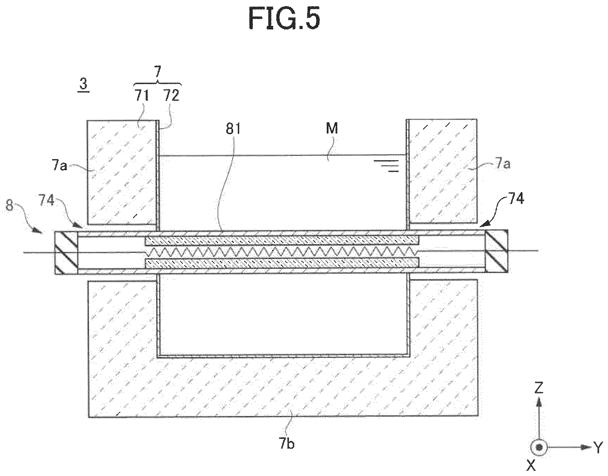

As illustrated in FIG. 5, the opening edges of the through holes 74 of the metal layer 72 may be integrated by welding with the metal cover 81 in the pipe shape over the entirety of the circumferential direction. Because the molten glass M does not flow into the through holes 74, the dimensional accuracy of the through holes 74 can be alleviated. Furthermore, a cooling material 76 as illustrated in FIG. 4 (A) is not necessary.

Similar to the above-described embodiment, multiple heaters 8 may be provided in a row with intervals in the X axis direction. The X axis direction is a flow direction of the molten glass M. Multiple heaters 8 may be arranged in a matrix form in the X axis direction and the Z axis direction. As seen in the Y axis direction, multiple heaters 8 may be arranged in a staggered pattern in the X axis direction.

### (Second modified embodiment)

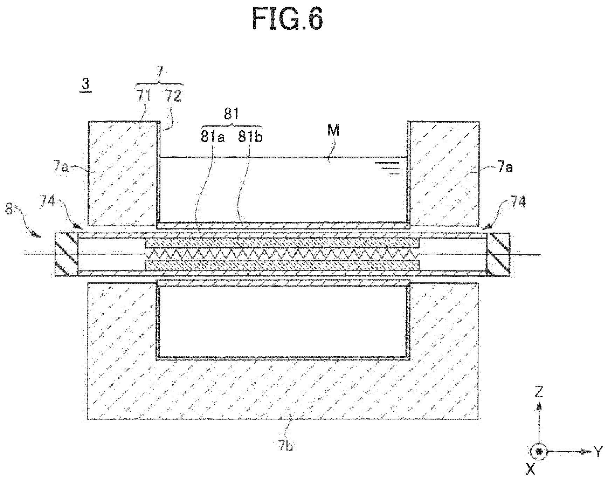

As illustrated in FIG. 6, the metal cover 81 of the heater 8 may be a double pipe, and may include an inner pipe 81a and an outer pipe 81b. The inner pipe 81a is inserted into the through holes 74 of the side walls 7a. The outer pipe 81b is not inserted into the through holes 74 of the side walls 7a, but is placed across the pair of side walls 7a, 7a.

The opening edges of the through holes 74 of the metal layer 72 are integrated by welding with the outer pipe 81b in the pipe shape over the entirety of the circumferential direction. Because the molten glass M does not flow into the through holes 74, the dimensional accuracy of the through holes 74 can be alleviated. Also, the cooling material 76 as illustrated in FIG. 4 (A) becomes unnecessary.

The outer pipe 81b protrudes to the inside of the wall 7 to be in contact with the molten glass M. The thickness of the outer pipe 81b may be greater than the thickness of the metal layer 72. This can prevent defects such as holes from occurring in the outer pipe 81b, and can prevent the molten glass M from flowing to the through holes 74. Even if defects such as holes are formed in the metal layer 72, such defects do not cause any problem. This is because the refractory material 71 prevents leakage of the molten glass M.

The metal cover 81 does not have to include the inner pipe 81a, and may have only the outer pipe 81b. Specifically, the metal cover 81 may be a single pipe.

Similar to the above-described embodiment, multiple heaters 8 may be provided in a row with intervals in the X axis direction. Multiple heaters 8 may be arranged in a matrix form in the X axis direction and the Z axis direction. As seen in the Y axis direction, multiple heaters 8 may be arranged in a staggered pattern in the X axis direction.

### (Third modified embodiment)

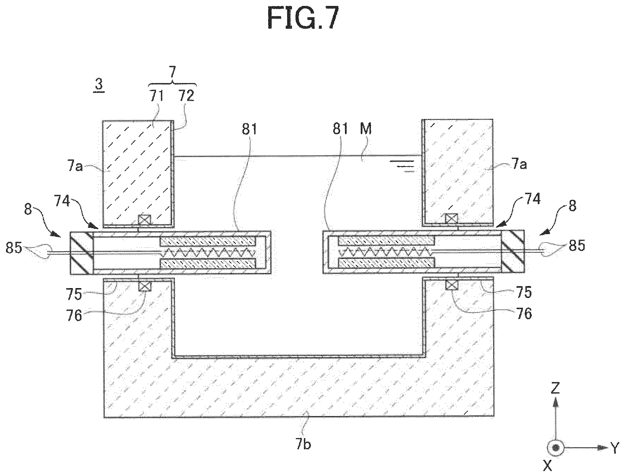

As illustrated in FIG. 7, one heater 8 may be inserted into the through hole 74 of the side wall 7a on the left side, and another heater 8 may be inserted into the through hole 74 of the side wall 7a on the right side. The lengths of the heaters 8 can be reduced, and therefore, the rigidity of the heaters 8 can be raised, and thermal deformation of the heaters 8 can be alleviated.

The ends of the metal covers 81 in the pipe shape are closed so that the molten glass M does not flow into the inside of the metal covers 81. Therefore, the pair of lead wires 85 are routed through an end of the metal covers 81. For example, one of the lead wires 85 passes through the center of the heat generating element 82 in the coil shape, and is routed, together with the remaining one of the lead wires 85, through the end of the heater 8.

Similar to the above-described first modified embodiment, the opening edges of the through holes 74 of the metal layer 72 may be integrated by welding with the metal cover 81 in the pipe shape over the entirety of the circumferential direction. Because the molten glass M does not flow into the through holes 74, the dimensional accuracy of the through holes 74 can be alleviated. Furthermore, the cooling material 76 as illustrated in FIG. 7 is not necessary.

Similar to the above-described second modified embodiment, the metal covers 81 may include inner pipes 81a and outer pipes 81b. The outer pipes 81b are not inserted into the through holes 74 of the side walls 7a, but protrude from the side walls 7a. The opening edges of the through holes 74 of the metal layer 72 may be integrated by welding with the outer pipes 81b in the pipe shape over the entirety of the circumferential direction.

The metal covers 81 do not have to include the inner pipes 81a, and may have only the outer pipes 81b. Specifically, each of the metal covers 81 may be a single pipe.

Similar to the above-described embodiment, multiple heaters 8 may be provided in a row with intervals in the X axis direction. Multiple heaters 8 may be arranged in a matrix form in the X axis direction and the Z axis direction. As seen in the Y axis direction, multiple heaters 8 may be arranged in a staggered pattern in the X axis direction.

### (Fourth modified embodiment)

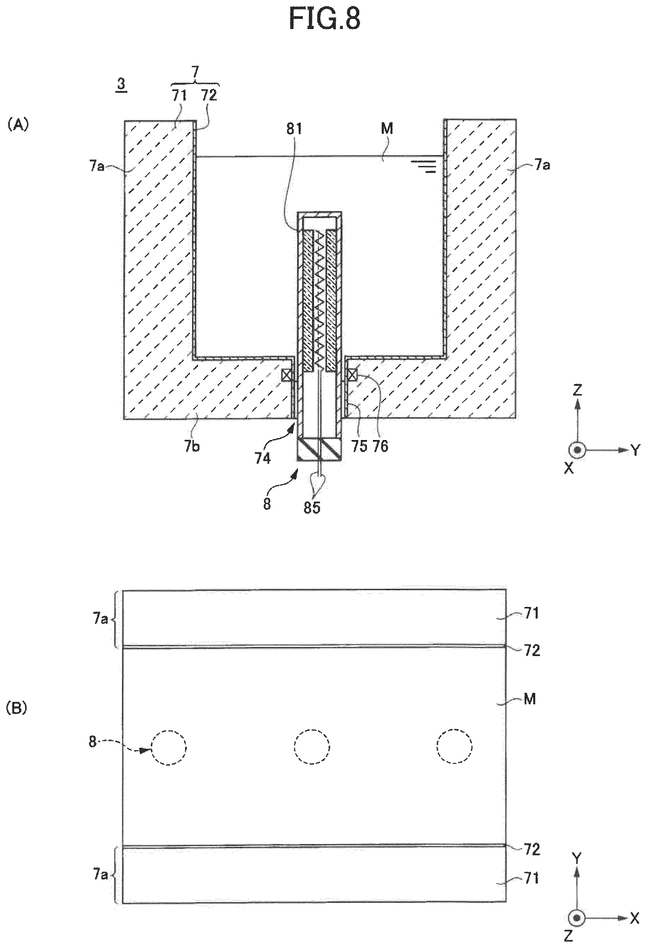

As illustrated in FIG. 8 (A), the heater 8 may be inserted into the through hole 74 of the lower wall 7b, and may protrude to the inside (the upper side) from the lower wall 7b. The heater 8 is in, for example, a rod shape, and the longitudinal direction of the heater 8 is a direction orthogonal to the inner wall surface (the upper surface) of the lower wall 7b. Bending due to gravity can be prevented.

The upper end of the metal cover 81 in the pipe shape is provided below the liquid surface of the molten glass M, and is therefore closed so that the molten glass M does not flow into the internal space of the metal cover 81. Accordingly, the pair of lead wires 85 are routed through the lower end of the metal cover 81.

In this modified embodiment, the upper end of the heater 8 is provided below the liquid surface of the molten glass M but may be provided above the liquid surface of the molten glass M. In this case, one of the lead wires 85 may be routed through the lower end of the heater 8, and the remaining one of the lead wires 85 may be routed through the upper end of the heater 8.

The wall 7 may further include a metal pipe 75 enclosing the through hole 74. The metal pipe 75 extends from the inner wall surface of the wall 7 to the outside (the lower side), and is integrated by welding with the metal layer 72. In the through hole 74, the component of the refractory material 71 can be prevented from dissolving to the molten glass M.

The transferring apparatus 3 may include a cooling material 76 for cooling the molten glass M of the through hole 74. For example, the cooling material 76 is embedded in the wall 7 to cool the through hole 74 with refrigerant or the like. Although the cooling material 76 is embedded in the inside of the wall 7 in FIG. 8 (A), the cooling material 76 may cool the through hole 74 from the outside (the lower side) of the wall 7.

Similar to the above-described first modified embodiment, the opening edges of the through holes 74 of the metal layer 72 may be integrated by welding with the metal cover 81 in the pipe shape over the entirety of the circumferential direction. Because the molten glass M does not flow into the through hole 74, the dimensional accuracy of the through hole 74 can be alleviated. Furthermore, the cooling material 76 as illustrated in FIG. 8 (A) is not necessary.

Similar to the above-described second modified embodiment, the metal cover 81 may include an inner pipe 81a and an outer pipe 81b. The outer pipe 81b is not inserted into the through hole 74 of the lower wall 7b, but protrudes from the lower wall 7b to the inside (the upper side). The opening edge of the through hole 74 of the metal layer 72 is integrated by welding with the outer pipe 81b in the pipe shape over the entirety of the circumferential direction.

The metal cover 81 does not have to include the inner pipe 81a, and may have only the outer pipe 81b. Specifically, the metal cover 81 may be a single pipe.

As illustrated in FIG. 8 (B), multiple heaters 8 may be provided in a row with intervals in the X axis direction. Multiple heaters 8 may be arranged in a matrix form in the X axis direction and the Y axis direction. As seen in the Z axis direction, multiple heaters 8 may be arranged in a staggered pattern in the X axis direction.

### (Fifth modified embodiment)

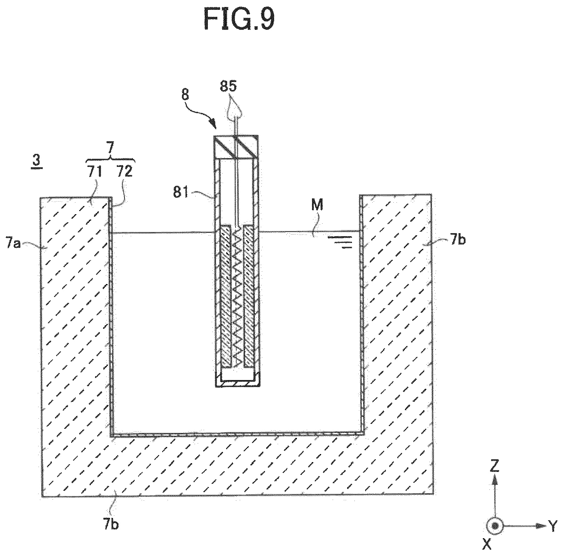

As illustrated in FIG. 9, the heater 8 is inserted into a through hole of a ceiling, not illustrated, and protrudes from the liquid surface of the molten glass M to the lower side. For example, the heater 8 is in a rod shape, and the longitudinal direction of the heater 8 is a direction orthogonal to a lower surface of a ceiling, not illustrated. Unlike the through holes 74 of the side walls 7a as illustrated in FIG. 4 (A) and the like and the through hole 74 of the lower wall 7b as illustrated in FIG. 8 (A), the molten glass M does not enter the through hole of the ceiling. Therefore, even if the heater 8 is replaced or rearranged while the channel is filled with the molten glass M, the molten glass does not leak.

The lower end of the metal cover 81 in the pipe shape is provided below the liquid surface of the molten glass M but above the lower wall 7b, and is therefore closed so that the molten glass M does not flow into the internal space of the metal cover 81. Accordingly, the pair of lead wires 85 are routed through the lower end of the metal cover 81.

Although the lower end of the metal cover 81 in the pipe shape is provided above the lower wall 7b, the technique of the present disclosure is not limited thereto. For example, a through hole may be formed in the lower wall 7b, and the heater 8 may be inserted into the through hole. However, from the viewpoint of workability such as replacement of the heater 8, it is preferable that there is no through hole in the lower wall 7b.

Similar to the above-described fourth modified embodiment, multiple heaters 8 may be provided in a row with intervals in the X axis direction. Multiple heaters 8 may be arranged in a matrix form in the X axis direction and the Y axis direction. As seen in the Z axis direction, multiple heaters 8 may be arranged in a staggered pattern in the X axis direction.

### (Sixth modified embodiment)

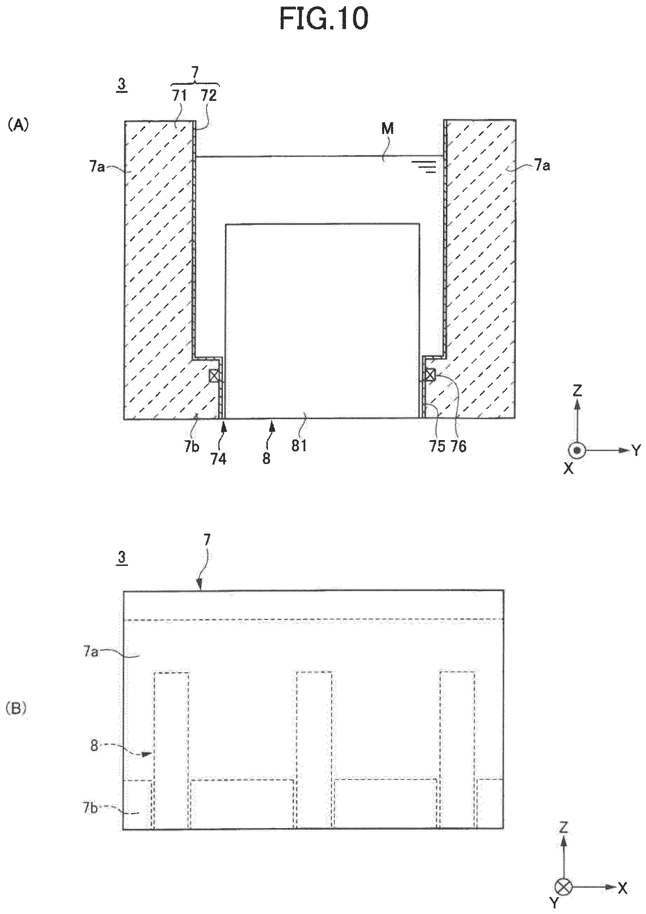

As illustrated in FIG. 10 (A) and FIG. 10 (B), the heater 8 may have a plate-shaped outer shape orthogonal to the flow of the molten glass M. The heater 8 is inserted into the through hole 74 of the lower wall 7b, and protrudes from the lower wall 7b to the inside (the upper side). The upper end of the heater 8 is provided below the liquid surface of the molten glass M. When the heater 8 is in a plate shape orthogonal to the flow of the molten glass M, the heater 8 can forcibly cause bubbles in the lower layer of the molten glass M to ascend toward the liquid surface of the molten glass M.

The heater 8 may be inserted into the through hole of the ceiling, and may protrude through the liquid surface of the molten glass M to the lower side. In this case, the lower end of the heater 8 may be provided above the lower wall 7b. Unlike the through hole 74 of the lower wall 7b as illustrated in FIG. 10 (A), the molten glass M does not enter the through hole of the ceiling. Therefore, even if the heater 8 is replaced or rearranged while the channel is filled with the molten glass M, the molten glass does not leak.

The metal cover 81 may be a pipe having a cross section in a quadrilateral shape with the upper end closed. Heat generating elements, not illustrated, are provided in the metal cover 81. The multiple heat generating elements are formed in, for example, a coil shape, a rod shape, or a tube shape, and are arranged vertically with intervals in the Y axis direction. Alternatively, a heat generating element may be formed in a plate shape. The plate that is the heat generating element may have regularly arranged slits in order to increase the electric resistance. For example, first slits and second slits may be formed alternately with intervals in the Y axis direction. The first slits extend downward from an upper edge of the plate, and the second slits extend upward from a lower edge of the plate.

Similar to the above-described first modified embodiment, the opening edge of the through hole 74 of the metal layer 72 may be integrated by welding with the metal cover 81, in a box shape of which the lower side is open, over the entirety of the circumferential direction. Because the molten glass M does not flow into the through hole 74, the dimensional accuracy of the through hole 74 can be alleviated. Furthermore, the cooling material 76 as illustrated in FIG. 10 (A) is not necessary.

Similar to the above-described second modified embodiment, the metal cover 81 may include an inner pipe 81a and an outer pipe 81b. The outer pipe 81b is not inserted into the through hole 74 of the lower wall 7b, but protrudes from the lower wall 7b to the inside (the upper side). The opening edge of the through hole 74 of the metal layer 72 is integrated by welding with the outer pipe 81b in the pipe shape over the entirety of the circumferential direction.

The metal cover 81 does not have to include the inner pipe 81a, and may have only the outer pipe 81b. Specifically, the metal cover 81 may be a single pipe.

As illustrated in FIG. 10 (B), multiple heaters 8 may be provided in a row with intervals in the X axis direction. Multiple heaters 8 may be arranged in a matrix form in the X axis direction and the Y axis direction. As seen in the Z axis direction, multiple heaters 8 may be arranged in a staggered pattern in the X axis direction.

### (Seventh modified embodiment)

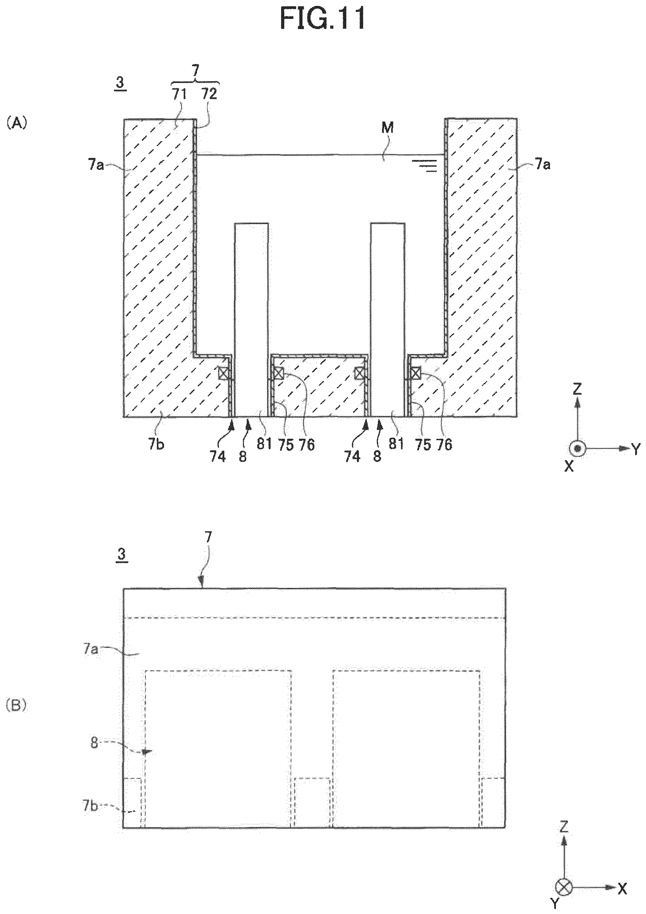

As illustrated in FIG. 11 (A) and FIG. 11 (B), the heaters 8 may have a plate-shaped outer shape parallel to the flow of the molten glass M. The heaters 8 are inserted into the through holes 74 of the lower wall 7b, and protrude from the lower wall 7b to the inside (the upper side). The upper ends of the heaters 8 are provided below the liquid surface of the molten glass M. Bubbles in the lower layer of the molten glass M can be forcibly caused to ascend toward the liquid surface of the molten glass M.

The heaters 8 may be inserted into the through holes of the ceiling, and may protrude downward from the liquid surface of the molten glass M. In this case, the lower ends of the heaters 8 may be provided above the lower wall 7b. Unlike the through holes 74 of the lower wall 7b as illustrated in FIG. 11 (A), the molten glass M does not enter the through holes of the ceiling. Therefore, even if the heaters 8 are replaced or rearranged while the channel is filled with the molten glass M, the molten glass does not leak.

The metal covers 81 may be a pipe having a cross section in a quadrilateral shape with the upper ends closed. Heat generating elements, not illustrated, are provided in the metal covers 81. The multiple heat generating elements are formed in, for example, a coil shape, a rod shape, or a tube shape, and are arranged vertically with intervals in the Y axis direction. Alternatively, a heat generating element may be formed in a plate shape. The plate that is the heat generating element may have regularly arranged slits in order to increase the electric resistance. For example, first slits and second slits may be formed alternately with intervals in the X axis direction. The first slits extend downward from an upper edge of the plate, and the second slits extend upward from a lower edge of the plate.

Similar to the above-described first modified embodiment, the opening edges of the through holes 74 of the metal layer 72 may be integrated by welding with the metal covers 81, in a box shape of which the lower side is open, over the entirety of the circumferential direction. Because the molten glass M does not flow into the through holes 74, the dimensional accuracy of the through holes 74 can be alleviated. Furthermore, the cooling material 76 as illustrated in FIG. 11 (A) is not necessary.

Similar to the above-described second modified embodiment, each of the metal covers 81 may include an inner pipe 81a and an outer pipe 81b. The outer pipes 81b are not inserted into the through holes 74 of the lower wall 7b, but protrude from the lower wall 7b to the inside (the upper side). The opening edges of the through holes 74 of the metal layer 72 are integrated by welding with the outer pipes 81b in the pipe shape over the entirety of the circumferential direction.

The metal covers 81 do not have to include the inner pipes 81a, and may have only the outer pipes 81b. Specifically, each of the metal covers 81 may be a single pipe.

As illustrated in FIG. 11 (A) and FIG. 11 (B), multiple heaters 8 may be arranged in a matrix form in the X axis direction and the Y axis direction. As seen in the Z axis direction, multiple heaters 8 may be arranged in a staggered pattern in the X axis direction. Multiple heaters 8 may be provided in a row with intervals in the X axis direction.

### (Eighth modified embodiment)

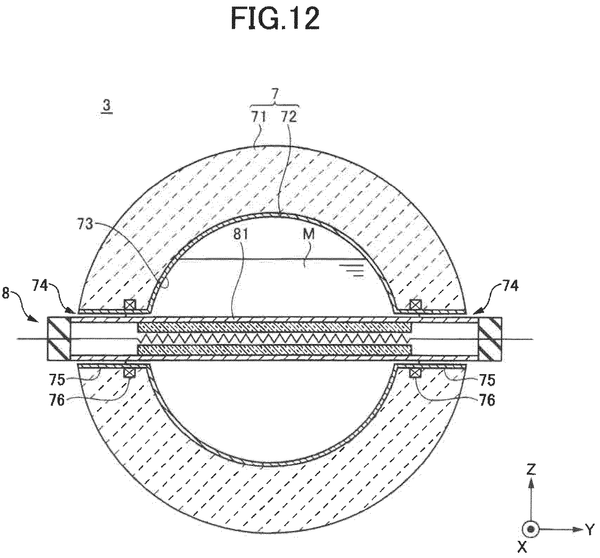

As illustrated in FIG. 12, the wall 7 may be formed in a pipe shape, and the metal layer 72 may be formed in a pipe shape. The metal layer 72 is closed in the cross section orthogonal to the flow direction of the molten glass M. Erosion of the refractory material 71 due to steam of the molten glass M can be alleviated, and the component of the refractory material 71 can be prevented from dropping into and mixing with the molten glass M. Although the metal layer 72 is in a pipe shape of which the cross section is in a circular shape in FIG. 12, the metal layer 72 may be in a pipe shape of which the cross section is in a rectangular shape.

For example, the heater 8 is in a rod shape, and the longitudinal direction of the heater 8 is a direction orthogonal to the inner wall surface 73 of the wall 7. The heater 8 is inserted into both of the through holes 74, 74, constituting a pair, of the wall 7. The heat generating element 82 extends from any given point of one of the through holes 74 to any given point of the other of the through holes 74.

One heater 8 may be inserted into one of the through holes 74, and another heater 8 may be inserted into the other of the through holes 74. Therefore, the length of the heater 8 can be reduced, and accordingly, the rigidity of the heater 8 can be raised, and thermal deformation of the heater 8 can be alleviated.

The wall 7 may further include metal pipes 75 encircling the through holes 74. The metal pipes 75 extend from the inner wall surface 73 of the wall 7 toward the outside, and are integrated with the metal layer 72 by welding. On the inside of the through holes 74, components of the refractory material 71 are prevented from dissolving into the molten glass M.

The transferring apparatus 3 may include cooling materials 76 for cooling the molten glass M in the through holes 74. For example, the cooling materials 76 are embedded in the wall 7 to cool the through holes 74 with refrigerant or the like. Although the cooling materials 76 are embedded in the inside of the wall 7 in FIG. 12, the cooling materials 76 may cool the through holes 74 from the outside of the wall 7.

Similar to the above-described first modified embodiment, the opening edges of the through holes 74 of the metal layer 72 may be integrated by welding with the metal cover 81 in the pipe shape over the entirety of the circumferential direction. Because the molten glass M does not flow into the through holes 74, the dimensional accuracy of the through holes 74 can be alleviated. Furthermore, a cooling material 76 as illustrated in FIG. 12 is not necessary.

Similar to the above-described second modified embodiment, the metal cover 81 may include an inner pipe 81a and an outer pipe 81b. The outer pipe 81b is not inserted into the through hole 74 of the lower wall 7b, but protrudes from the wall 7 to the inside. The opening edges of the through holes 74 of the metal layer 72 are integrated by welding with the outer pipe 81b in the pipe shape over the entirety of the circumferential direction.

The metal cover 81 does not have to include the inner pipe 81a, and may have only the outer pipe 81b. Specifically, the metal cover 81 may be a single pipe.

Similar to the above-described embodiment, multiple heaters 8 may be provided in a row with intervals in the X axis direction. Furthermore, multiple heaters 8 may be arranged with intervals in the circumferential direction of the wall 7 in the pipe shape. Multiple heaters 8 may be arranged in a spiral form in the wall 7 in the pipe shape.

The apparatus for transferring molten glass, the production apparatus for producing the glass article, and the production method for producing the glass article according to the present disclosure have been hereinabove explained, but the present disclosure is not limited to the above-described embodiments and the like. Various changes, modifications, substitutions, additions, deletions, and combinations can be made within the scope of the claims. It is to be understood that these belong to the technical scope of the present disclosure.

### REFERENCE SIGNS LIST

- 1: glass article producing apparatus
- 2: melting apparatus
- 3: transferring apparatus
- 4: forming apparatus
- 5: annealing apparatus
- 6: processing apparatus
- 7: wall
- 71: refractory material
- 72: metal layer
- 8: heater
- 81: metal cover
- 82: heat generating element
- M: molten glass

## Claims

1. An apparatus (3) for transferring molten glass (M), comprising:
a wall (7) including a refractory material (71) and a metal layer (72) provided on an inside of the refractory material (71), the metal layer (72) coming into contact with the molten glass (M), and the metal layer (72) being configured to guide the molten glass (M); and
a heater (8) including a metal cover (81) protruding to an inside of the wall (7), the metal cover (81) coming into contact with the molten glass (M), the heater (8) including a heat generating element (82) electrically insulated from the metal cover (81), and the heat generating element (82) receiving electric power to radiate heat rays to heat the metal cover (81) from an inside,
wherein the heater (8) further includes a spacer (83) configured to electrically insulate between the metal cover (81) and the heat generating element (82),
**characterized in that** the spacer (83) is constituted by sapphire.

2. The apparatus (3) according to claim 1, wherein the heater (8) is provided at a position so as to be immersed in an inside of the molten glass (M).

3. The apparatus (3) according to claim 1 or 2, wherein the metal layer (72) is constituted by a metal including one or more types selected from platinum, rhodium, tungsten, iridium, and molybdenum.

4. The apparatus (3) according to any one of claims 1 to 3, wherein the metal cover (81) is constituted by a metal including one or more types selected from platinum, rhodium, tungsten, iridium, and molybdenum.

5. The apparatus (3) according to any one of claims 1 to 4, wherein the heater (8) is in a rod shape, and a longitudinal direction of the heater (8) is a direction orthogonal to an inner wall surface of the wall (7).

6. The apparatus (3) according to any one of claims 1 to 5, wherein the metal layer (72) is formed in a pipe shape.

7. The apparatus (3) according to any one of claims 1 to 6, wherein the heat generating element (82) is constituted by graphite or a carbon fiber reinforced carbon composite material.

8. An apparatus (1) for producing a glass article, comprising:
a melting apparatus (2) configured to generate molten glass (M) by melting a raw material of glass;
the apparatus (3) for transferring the molten glass (M) according to any one of claims 1 to 7 configured to transfer the molten glass (M) produced by the melting apparatus (2);
a forming apparatus (4) configured to form the molten glass (M) transferred by the apparatus (3) for transferring the molten glass (M) into glass in a desired shape;
an annealing apparatus (5) configured to anneal the glass formed by the forming apparatus (4); and
a processing apparatus (6) configured to process the glass annealed by the annealing apparatus (5) into the glass article.

9. The apparatus (1) according to claim 8, wherein the apparatus (3) for transferring the molten glass (M) is a fining tank.

10. A method for producing a glass article, comprising:
preparing a raw material of glass (S1);
generating molten glass (M) by melting the raw material (S2);
transferring the molten glass (M) with the apparatus (3) for transferring the molten glass (M) according to any one of claims 1 to 7 (S3);
forming the molten glass (M) transferred by the apparatus (3) for transferring the molten glass (M) into glass in a desired shape (S4);
annealing the formed glass (S5); and
processing the annealed glass into the glass article (S6).

11. The method according to claim 10, further comprising:
heating the molten glass (M) with the apparatus (3) for transferring the molten glass (M) to fine the molten glass (M).

## Patentansprüche

1. Vorrichtung (3) zum Transferieren von geschmolzenem Glas (M), umfassend:
eine Wand (7), aufweisend ein feuerfestes Material (71) und eine Metallschicht (72), die auf einer Innenseite des feuerfesten Materials (71) angeordnet ist, wobei die Metallschicht (72) mit dem geschmolzenen Glas (M) in Kontakt kommt und wobei die Metallschicht (72) konfiguriert ist, um das geschmolzene Glas (M) zu führen; und
eine Heizvorrichtung (8), aufweisend eine Metallabdeckung (81), die in ein Inneres der Wand (7) hineinragt, wobei die Metallabdeckung (81) mit dem geschmolzenen Glas (M) in Kontakt kommt, wobei die Heizvorrichtung (8) ein von der Metallabdeckung (81) elektrisch isoliertes wärmeerzeugendes Element (82) aufweist, und wobei das wärmeerzeugende Element (82) elektrische Energie empfängt, um Wärmestrahlen abzustrahlen um die Metallabdeckung (81) von innen zu erwärmen,
wobei die Heizvorrichtung (8) ferner einen Abstandshalter (83) aufweist, der konfiguriert ist, um die Metallabdeckung (81) und das wärmeerzeugende Element (82) elektrisch voneinander zu isolieren,
**dadurch gekennzeichnet, dass** der Abstandshalter (83) aus Saphir gebildet ist.

2. Vorrichtung (3) nach Anspruch 1,
wobei die Heizvorrichtung (8) an einer Stelle angeordnet ist, so dass sie in ein Inneres des geschmolzenen Glases (M) eintaucht.

3. Vorrichtung (3) nach Anspruch 1 oder 2,
wobei die Metallschicht (72) aus einem Metall gebildet ist, das eine oder mehrere Arten, ausgewählt aus Platin, Rhodium, Wolfram, Iridium und Molybdän, einschließt.

4. Vorrichtung (3) nach einem der Ansprüche 1 bis 3,
wobei die Metallabdeckung (81) aus einem Metall gebildet ist, das eine oder mehrere Arten, ausgewählt aus Platin, Rhodium, Wolfram, Iridium und Molybdän, einschließt.

5. Vorrichtung (3) nach einem der Ansprüche 1 bis 4,
wobei die Heizvorrichtung (8) stabförmig ist und eine Längsrichtung der Heizvorrichtung (8) orthogonal zu einer Innenwandoberfläche der Wand (7) verläuft.

6. Vorrichtung (3) nach einem der Ansprüche 1 bis 5,
wobei die Metallschicht (72) rohrförmig geformt ist.

7. Vorrichtung (3) nach einem der Ansprüche 1 bis 6,
wobei das wärmeerzeugende Element (82) aus Graphit oder einem mit Kohlenstofffasern verstärkten Kohlenstoffverbundmaterial gebildet ist.

8. Vorrichtung (1) zum Herstellen eines Glasartikels, umfassend:
eine Schmelzvorrichtung (2), die konfiguriert ist, um durch Schmelzen eines Glasrohmaterials geschmolzenes Glas (M) zu erzeugen;
die Vorrichtung (3) zum Transferieren des geschmolzenen Glases (M) nach einem der Ansprüche 1 bis 7, die konfiguriert ist, um das von der Schmelzvorrichtung (2) hergestellte geschmolzene Glas (M) zu transferieren;
eine Formvorrichtung (4), die konfiguriert ist, um das von der Vorrichtung (3) zum Transferieren des geschmolzenen Glases (M) transferierte geschmolzene Glas (M) zu Glas in einer gewünschten Form zu formen;
eine Temperierungsvorrichtung (5), die konfiguriert ist, um das von der Formvorrichtung (4) geformte Glas zu temperieren; und
eine Verarbeitungsvorrichtung (6), die konfiguriert ist, um das von der Temperierungsvorrichtung (5) temperierte Glas zu dem Glasartikel zu verarbeiten.

9. Vorrichtung (1) nach Anspruch 8, wobei die Vorrichtung (3) zum Transferieren des geschmolzenen Glases (M) ein Verfeinerungstank ist.

10. Verfahren zum Herstellen eines Glasartikels, umfassend:
Bereitstellen eines Glasrohmaterials (S1);
Erzeugen von geschmolzenem Glas (M) durch Schmelzen des Rohmaterials (S2);
Transferieren des geschmolzenen Glases (M) mit der Vorrichtung (3) zum Transferieren des geschmolzenen Glases (M) nach einem der Ansprüche 1 bis 7 (S3);
Formen des von der Vorrichtung (3) zum Transferieren des geschmolzenen Glases (M) transferierten geschmolzenen Glases (M) zu Glas in einer gewünschten Form (S4);
Tempern des geformten Glases (S5); und
Verarbeiten des getemperten Glases zu dem Glasartikel (S6).

11. Verfahren nach Anspruch 10, ferner umfassend:
Erwärmen des geschmolzenen Glases (M) mit der Vorrichtung (3) zum Transferieren des geschmolzenen Glases (M), um das geschmolzene Glas (M) zu verfeinern.

## Revendications

1. Appareil (3) permettant de transférer du verre fondu (M), comprenant :
une paroi (7) comportant un matériau réfractaire (71) et une couche de métal (72) fournie sur un intérieur du matériau réfractaire (71), la couche de métal (72) venant en contact avec le verre fondu (M), et la couche de métal (72) étant conçue pour guider le verre fondu (M) ; et un chauffage (8) comportant une couverture en métal (81) faisant saillie vers un intérieur de la paroi (7), la couverture en métal (81) venant en contact avec le verre fondu (M), le chauffage (8) comportant un élément générateur de chaleur (82) électriquement isolé de la couverture en métal (81), et l'élément générateur de chaleur (82) recevant de la puissance électrique pour rayonner des rayons de chaleur pour chauffer la couverture en métal (81) à partir d'un intérieur,
dans lequel le chauffage (8) comporte en outre un espaceur (83) conçu pour isoler électriquement entre la couverture en métal (81) et l'élément générateur de chaleur (82),
**caractérisé en ce que** l'espaceur (83) est constitué de saphir.

2. Appareil (3) selon la revendication 1, dans lequel le chauffage (8) est fourni au niveau d'une position de façon à être immergé dans un intérieur du verre fondu (M).

3. Appareil (3) selon la revendication 1 ou 2, dans lequel la couche de métal (72) est constituée d'un métal comportant un ou plusieurs types choisis parmi platine, rhodium, tungstène, iridium et molybdène.

4. Appareil (3) selon l'une quelconque des revendications 1 à 3, dans lequel la couverture en métal (81) est constituée d'un métal comportant un ou plusieurs types choisis parmi platine, rhodium, tungstène, iridium et molybdène.

5. Appareil (3) selon l'une quelconque des revendications 1 à 4, dans lequel le chauffage (8) est sous une forme de tige, et une direction longitudinale du chauffage (8) est une direction orthogonale à une surface de paroi interne de la paroi (7).

6. Appareil (3) selon l'une quelconque des revendications 1 à 5, dans lequel la couche de métal (72) est formée sous une forme de tuyau.

7. Appareil (3) selon l'une quelconque des revendications 1 à 6, dans lequel l'élément générateur de chaleur (82) est constitué de graphite ou d'un matériau composite de carbone renforcé de fibres de carbone.

8. Appareil (1) permettant de produire un article en verre, comprenant :
un appareil de fusion (2) conçu pour générer du verre fondu (M) en faisant fondre une matière première de verre ;
l'appareil (3) permettant de transférer le verre fondu (M) selon l'une quelconque des revendications 1 à 7 conçu pour transférer le verre fondu (M) produit par l'appareil de fusion (2) ;
un appareil de formage (4) conçu pour former le verre fondu (M) transféré par l'appareil (3) permettant de transférer le verre fondu (M) en du verre sous une forme souhaitée ;
un appareil de recuit (5) conçu pour recuire le verre formé par l'appareil de formage (4) ; et
un appareil de traitement (6) conçu pour transformer le verre recuit par l'appareil de recuit (5) en l'article en verre.

9. Appareil (1) selon la revendication 8, dans lequel l'appareil (3) permettant de transférer le verre fondu (M) est une cuve d'affinage.

10. Procédé permettant de produire un article en verre, comprenant :
la préparation d'une matière première de verre (S1) ;
la génération de verre fondu (M) en faisant fondre la matière première (S2) ;
le transfert du verre fondu (M) avec l'appareil (3) permettant de transférer le verre fondu (M) selon l'une quelconque des revendications 1 à 7 (S3) ;
le formage du verre fondu (M) transféré par l'appareil (3) permettant de transférer le verre fondu (M) en du verre sous une forme souhaitée (S4) ;
le recuit du verre formé (S5) ; et
la transformation du verre recuit en l'article en verre (S6).

11. Procédé selon la revendication 10, comprenant en outre :
le chauffage du verre fondu (M) avec l'appareil (3) permettant de transférer le verre fondu (M) pour affiner le verre fondu (M).
